# EUROPEAN PATENT SPECIFICATION

(11) **EP 3 249 091 B1**
(45) Date of publication and mention of the grant of the patent: **09.01.2019**
(21) Application number: 17165986.5
(22) Date of filing: 11.04.2017
(51) Int. Cl.: D06F 39/02

(54) **WASHING MACHINE AND LIQUID ADDITIVE SUPPLY DEVICE FOR A WASHING MACHINE**
WASCHMASCHINE UND VORRICHTUNG ZUR ZUFÜHRUNG EINES FLÜSSIGEN ADDITIVS FÜR EINE WASCHMASCHINE
MACHINE À LAVER ET DISPOSITIF D'ALIMENTATION EN ADDITIF LIQUIDE POUR UNE MACHINE À LAVER

(30) Priority: 27.05.2016 KR 20160065954
(43) Date of publication of application: 29.11.2017
(73) Proprietor: Dongbu Daewoo Electronics Corporation, Seoul 06194 (KR)
(72) Inventor: SONG, Il Keun, 06194 Seoul (KR); KIM, Hyeon Gyu, 06194 Seoul (KR)
(74) Representative: Hübner, Gerd

(56) References cited:
- CN-A- 1 746 408
- DE-A1- 3 712 323
- GB-A- 2 274 701

## Description

### CROSS-REFERENCE TO RELATED APPLICATIONS

This application is based on and claims priority to Korean Patent Application No. 10-2016-0065954, filed on May 27, 2016, the disclosure of which is incorporated herein by reference in its entirety.

### TECHNICAL FIELD

Embodiments of the present disclosure generally relate to the field of washing machines, and more specifically, to a liquid additive supply device for a washing machine.

### BACKGROUND

A washing machine is an apparatus that removes contaminants from clothing, bedding or the like, using a detergent, friction created by a flow of water and the rotation of a pulsator, and forces or impacts applied to the laundry by the pulsator. Newly developed fully automatic washing machines are capable of automatically performing a series of steps such as washing, rinsing, and removing excess water, without the assistance of the user between steps.

Depending on the type of washing tub used to hold objects to be washed, washing machines may be classified into top-loading washing machines, where a washing tub stands upright, and drum-type washing machines where the washing tub is disposed horizontally. Compared to top-loading washing machines, drum-type washing machines have a reduced overall height and an increased washing capacity, and rarely cause fabric to become twisted. As such, the demand for drum-type washing machines is increasing.

Generally, washing machines are provided with a detergent supply device for supplying a proper amount of detergent depending on the quantity of laundry to be washed. When water is supplied into the tub, the detergent supply device is operated so that detergent is supplied into the tub to mix with the water. Examples of the detergent used in washing laundry include powder detergents and liquid detergents.

The structure of the detergent supply device may vary depending on the kind of detergent used, and a washing machine that uses a liquid detergent may have some advantages over a washing machine that uses a powder detergent. For example, it is often difficult to move a powder detergent upward. As such, the installation position of the detergent supply device is limited to an upper portion of the tub. In contrast, a liquid detergent can be easily moved upward by a device capable of forcibly moving fluids, such as a pump or the like. For a washing machine that uses a liquid detergent, the detergent supply device may be installed under the tub. In other words, for washing machines that use liquid detergent, components can be arranged more freely than for washing machines that use a powder detergent.

Furthermore, liquid detergent may be diluted with water and produces a better washing/foaming action. Thus, liquid detergent has become popular in recent years. A detergent supply device of a washing machine may be provided with a reservoir tank capable of storing liquid detergent. However, it is difficult to visually confirm the fill-level of the liquid detergent through the reservoir tank. In order to prevent an insufficient amount of liquid detergent from being used, the detergent supply device may be provided with a separate detergent detecting sensor.

The detergent supply device of a washing machine may detect the existence of, or the absence of, detergent by using a buoyant floater. However, a detergent or a fabric softener (hereinafter referred to as a "liquid additive") stored in the detergent supply device may be very high in viscosity. In this case, the buoyancy of the floater may be compromised. Even when the liquid additive is used in a large amount, the floater may fail to float upward due to the viscosity of the liquid. As a result, a sensing failure may occur, and it may not be possible to detect the lack of liquid additive.

DE 37 12 323 A1 discloses a washing machine including a drum configured to hold laundry, a water supply unit configured to supply water into the drum, and a liquid additive supply device configured to supply a liquid additive into the drum. The liquid additive supply device includes a reservoir tank configured to hold the liquid additive, and a buoyant floater disposed in the reservoir tank and configured to float on the liquid additive, where a position of the buoyant floater indicates a fill-level of the liquid additive, and where the buoyant floater includes a slanted portion and a pointed top to reduce a resistance of the liquid additive when the buoyant floater floats upward

### SUMMARY

It is an object of the present invention to provide a washing machine with a liquid additive supply device configured to supply a liquid additive into the drum in an improved manner.

This object is achieved by a washing machine comprising the characterizing features of claim 1.

### BRIEF DESCRIPTION OF THE DRAWINGS

Fig. 1 is a perspective view illustrating an exemplary washing machine including an exemplary liquid additive supply device according to one embodiment of the present disclosure.
Fig. 2 is a side view illustrating a schematic structure of the washing machine illustrated in Fig. 1 according to embodiments of the present disclosure.
Fig. 3A is an exploded perspective view illustrating the removal of an exemplary reservoir tank in a liquid additive supply device according to embodiments of the present disclosure.
Fig. 3B is a diagram illustrating an exemplary liquid additive supply device according to one embodiment of the present disclosure.
Fig. 4 is a side view of an exemplary liquid additive supply device according to one embodiment of the present disclosure.
Fig. 5 is a partially-cutaway perspective view illustrating a detailed configuration and structure of an exemplary floater of a liquid additive supply device according to one embodiment of the present disclosure.
Figs. 6, 7 and 8 are diagrams illustrating structures of an exemplary buoyant portion of a floater of a liquid additive supply device according to one embodiment of the present disclosure.

### DETAILED DESCRIPTION

In the following detailed description, reference is made to the accompanying drawings, which form a part hereof. The illustrative embodiments described in the detailed description, drawings, and claims are not meant to be limiting. Other embodiments may be utilized, and other changes may be made, without departing from the spirit or scope of the subject matter presented here.

One or more exemplary embodiments of the present disclosure will be described more fully hereinafter with reference to the accompanying drawings, in which one or more exemplary embodiments of the disclosure can be easily determined by those skilled in the art. As those skilled in the art will realize, the described exemplary embodiments may be modified in various different ways, all without departing from the spirit or scope of the present disclosure, which is not limited to the exemplary embodiments described herein.

It is noted that the drawings are schematic and are not necessarily dimensionally illustrated. Relative sizes and proportions of parts in the drawings may be exaggerated or reduced in size, and a predetermined size is merely exemplary and not limiting. The same reference numerals designate the same structures, elements, or parts illustrated in two or more drawings in order to exhibit similar characteristics.

The exemplary drawings of the present disclosure illustrate ideal exemplary embodiments of the present disclosure in more detail. As a result, various modifications of the drawings are expected. Accordingly, the exemplary embodiments are not limited to a specific form of the illustrated region, and for example, include modifications of form due to manufacturing.

The configuration and operation according to one embodiment of the present disclosure will now be described with reference to the accompanying drawings.

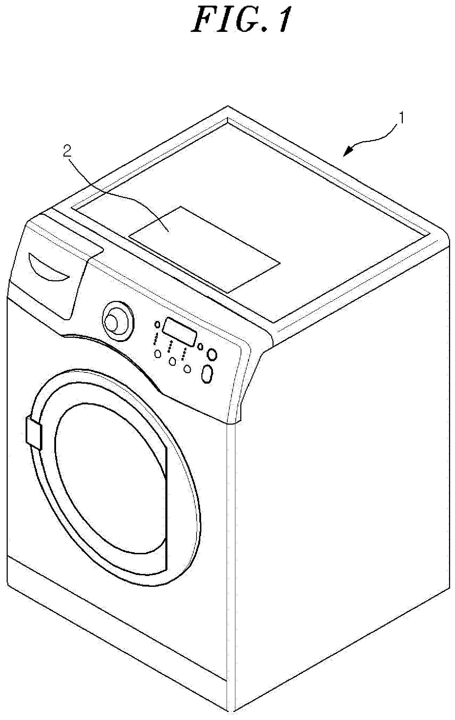

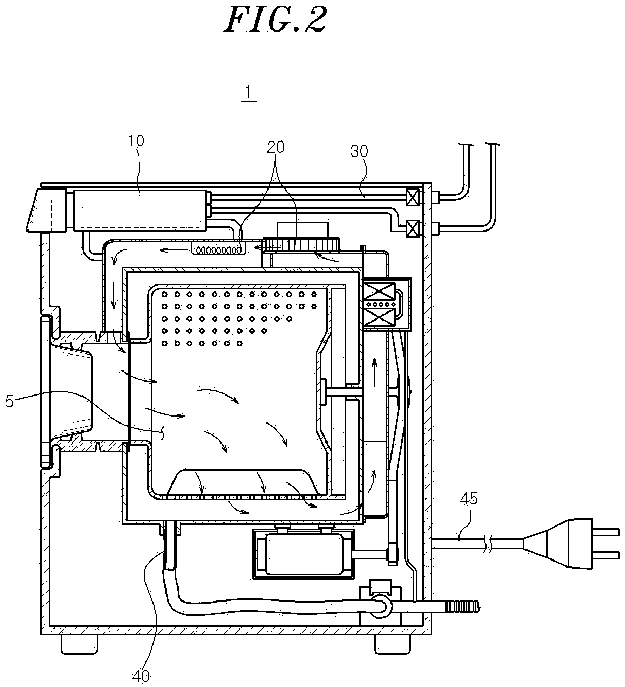

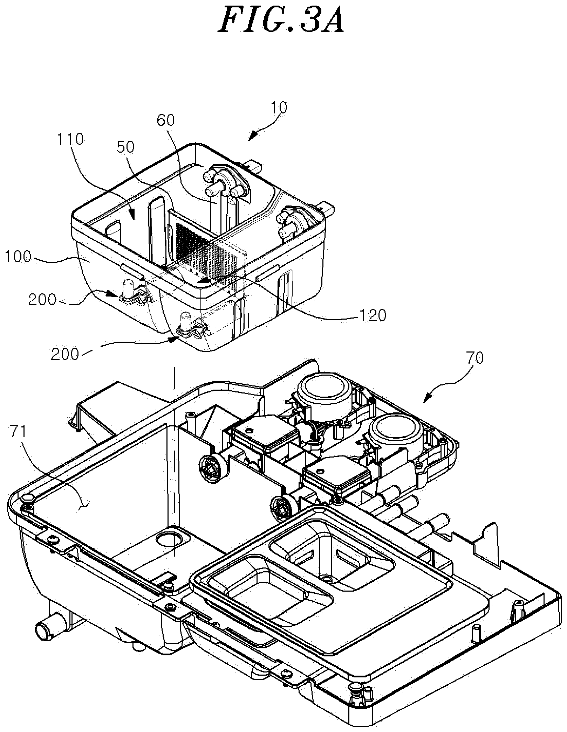

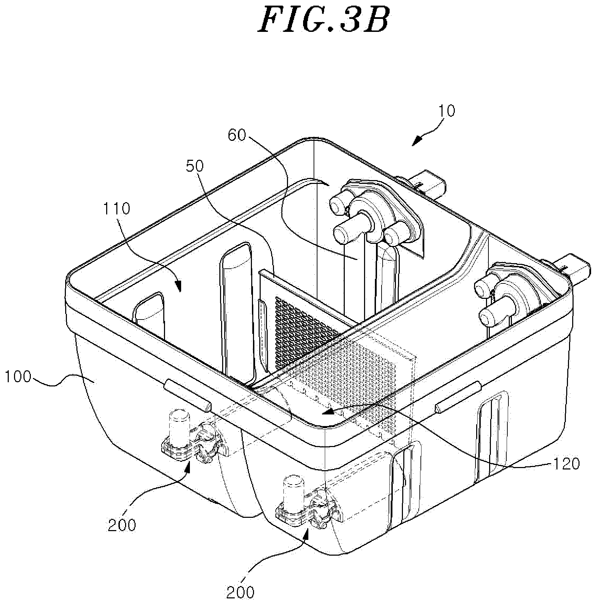

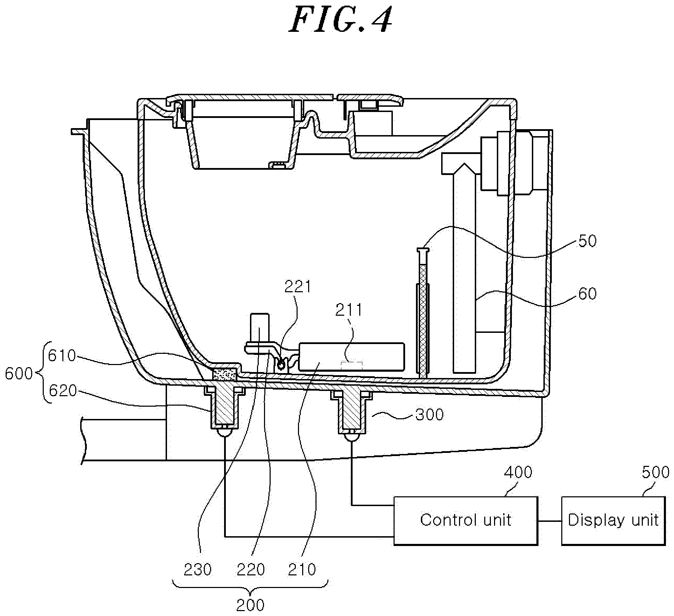

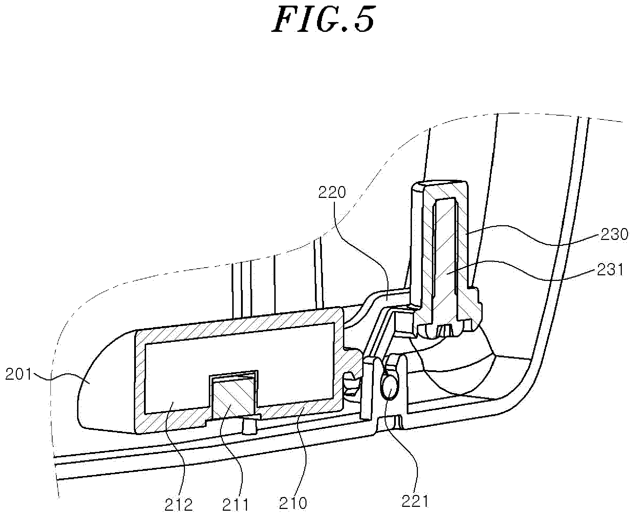

Fig. 1 is a perspective view illustrating an exemplary washing machine including an exemplary liquid additive supply device according to one embodiment of the present disclosure. Fig. 2 is a side view illustrating a schematic structure of the washing machine illustrated in Fig. 1 according to embodiments of the present disclosure. Fig. 3A is an exploded perspective view illustrating the removal of an exemplary reservoir tank in a liquid additive supply device according to embodiments of the present disclosure. Fig. 3B is a diagram illustrating an exemplary liquid additive supply device according to one embodiment of the present disclosure. Fig. 4 is a side view of an exemplary liquid additive supply device according to one embodiment of the present disclosure. Fig. 5 is a partially-cutaway perspective view illustrating a detailed configuration and structure of an exemplary floater of a liquid additive supply device according to one embodiment of the present disclosure.

Referring to Fig. 1 and Fig. 2, the drum type washing machine 1 includes a liquid additive supply device 10 capable of storing a liquid additive such as a detergent or a fabric softener. The liquid additive supply device 10 may be disposed in a front upper portion of the washing machine 1. The liquid additive supply device 10 may be selectively opened and closed using a cover 2.

As illustrated in Fig. 2, the drum type washing machine 1 may include: a drum 5; a drying device 20 configured to dry laundry contained in the drum 5; a water supply unit 30 configured to supply water to the drum 5; a water drain 40 configured to drain the water; a power supply device or cord 45 configured to supply electric power to the washing machine 1; and a liquid additive supply device 10 configured to supply a liquid additive used to wash the laundry.

The drum 5 holds the laundry to be dried. The drum 5 may be connected to the drying device 20 and the water supply unit 30. When drying laundry, air may be supplied to the drum 5 from the drying device 20. When washing laundry, water may be supplied from the water supply unit 30. The water contained in the drum 5 may be drained through the water drain 40.

The drying device 20 may dry laundry contained in the drum 5. The drying device 20 may include a circulation device configured to circulate air within the drum 5, an exhaust port configured to release water vapor generated when the laundry is being dried, and a heater configured to heat the air within the drum 5.

The water supply unit 30 supplies the water into the drum 5. The water supply unit 30 may be connected to the liquid additive supply device 10, where the water supplied from the water supply unit 30 is supplied into the drum 5 by the liquid additive supply device 10. The water supply unit 30 may include, for example, a pipe or a hose and may be disposed in an upper portion of the washing machine 1.

The water drain 40 allows water discharged from the drum 5 to be drained out of the washing machine 1. The power supply device 45 supplies electric power to the washing machine 1.

The liquid additive supply device or reservoir 10 may hold a liquid additive used to wash laundry. The liquid additive may be mixed with the water and supplied to the drum 5. According to some embodiments, multiple liquid additive supply devices are disposed within the washing machine 1. For example, the liquid additive supply device 10 may be divided into compartments for separately storing liquid detergent, powdery detergent, and fabric softener.

Referring to Figs. 3A to 4, the liquid additive supply device 10 may include a reservoir tank 100 and a floater 200, according to embodiments of the present disclosure.

The inclusion of the aforementioned components in one embodiment of the present disclosure does not mean that one embodiment of the present disclosure consists of only the aforementioned components but means that one embodiment of the present disclosure includes these components. One embodiment of the present disclosure may further include other components (e.g., the well-known components of a liquid additive supply device). The well-known components will not be described herein because they may obscure the scope of the present disclosure.

The reservoir tank 100 may be removably disposed within an interior space 71 of a detergent dispenser 70 to store a liquid additive such as a detergent or a fabric softener. The detergent dispenser 70 is installed in an upper portion of the washing machine 1.

As illustrated in Fig. 3A, the reservoir tank 100 may be accommodated within the interior space 71 of the detergent dispenser 70 so that the reservoir tank 100 can be removed from the detergent dispenser 70.

As illustrated in Fig. 4, a removal sensing unit 600 may be included for sensing removal of the reservoir tank 100. The removal sensing unit 600 may include a removal sensing magnetic member 610 and a removal sensor 620. The removal sensing magnetic member 610 may be disposed on a lower surface of the reservoir tank 100, for example.

Furthermore, the removal sensor 620 may be disposed within the detergent dispenser 70 facing the removal sensing magnetic member 610 so that the removal sensor 620 can sense the removal sensing magnetic member 610. The removal sensor 620 may generate a signal upon sensing a magnetic field of the removal sensing magnetic member 610. The signal is transmitted to a control unit 400 so that the control unit 400 is aware of the removal of the reservoir tank 100.

As illustrated in Fig. 3B, the reservoir tank 100 may be divided into a first tank 110 and a second tank 120 to separately store different liquid additives (e.g., a detergent and a fabric softener). The dimensions of the reservoir tank 100 may vary based on the kind of liquid additives to be stored therein.

When using the washing machine 1, the user places laundry into the washing machine 1 and selects the kind of liquid additives before starting a washing operation. If the liquid additive is selected and the washing operation is started (e.g., by operating selection keys disposed on an outer surface of the washing machine 1), a pump (e.g., a suction pump) is driven when the water is supplied to the tub 5 so that the liquid additive stored in the reservoir tank 100 is supplied to the tub 5.

At this time, the floater 200 senses a fill-level of the liquid additive. If the fill-level of the liquid is below a threshold, the floater 200 may notify the user of the shortage of liquid additive, and the user may add more liquid additive to the reservoir tank.

A filter 50 may be disposed in the reservoir tank 100 to filter extraneous materials out of the liquid additive. The liquid additive passed through the filter 50 may be moved along by a suction nozzle 60 disposed on one side of the reservoir tank 100, and may be supplied into the tub 5 through a supply line (not shown).

The floater 200 may be disposed on one side of a bottom surface of the reservoir tank 100. The floater 200 may float upward due to buoyancy when the liquid additive is added, and a position of the floater is used to determine the fill-level of the liquid additive.

When the floater 200 is moved upward, a slanted portion 201 having a width that narrows toward a top of the slanted portion 201 may be coupled to the floater 200 to reduce resistance or friction caused by the liquid additive.

When the reservoir tank 100 includes the first tank 110 and the second tank 120 as described above, a plurality of floaters 200 may be used, where the first tank 110 and the second tank 120 include independent floaters 200.

Specifically, as illustrated in Figs. 4 and 5, the floater 200 may include a buoyant portion 210, a connecting arm 220 and a weight 230.

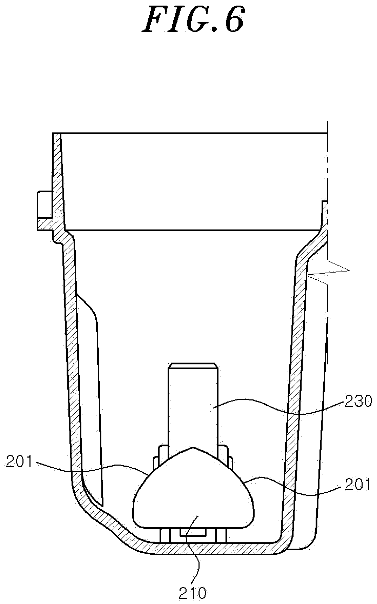

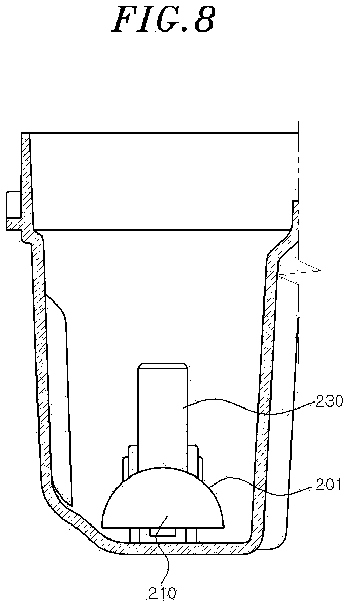

The buoyant portion 210 is configured to generate a substantial buoyant force so that the floater 200 floats upward in the liquid additive due to the buoyant force. The buoyant portion 210 may include the slanted portion 201 described above. Different examples of the floater 200 will be described later with reference to Figs. 6 and 8 according to embodiments of the present invention.

The connecting arm 220 may be connected to the buoyant portion 210 and may be coupled to one side of the reservoir tank 100 using hinge 221 so that the buoyant portion 210 can rotate about the hinge 221.

The weight 230 is disposed at an end of the connecting arm 220 opposite from the buoyant portion 210. The weight 230 may apply a load (e.g., a downward force) to the connecting arm 220, and may help the buoyant portion 210 easily float upward due to the buoyant force.

In this regard, the liquid additive supply device 10 may further include a sensing unit 300 as illustrated in Fig. 4.

The sensing unit 300 may be disposed on one side of the reservoir tank 100 facing the buoyant portion 210, and may sense the buoyant portion 210, which indicates a shortage of the liquid additive. If liquid additive is added to the reservoir tank 100, the fill-level of the liquid additive increases. Thus, the buoyant portion 210 moves upward due to the buoyant force, and moves away from the sensing unit 300. The fill-level of the liquid additive will be lower when the amount of liquid additive is deficient. Thus, the buoyant portion 210 moves toward the sensing unit 300. At this time, the sensing unit 300 senses the proximity of the buoyant portion 210 and, therefore, identifies a shortage of the liquid additive.

A magnetic member 211 to be sensed by the sensing unit 300 may be disposed within the buoyant portion 210 so that the sensing unit 300 can sense the proximity of the buoyant portion 210. Since the magnetic member 211 generates a magnetic field, the sensing unit 300 may sense the magnetic field of the magnetic member 211 and may sense the proximity of the buoyant portion 210 without making contact with the buoyant portion 210.

When the magnetic member 211 is disposed at a distal end of the buoyant portion 210 relatively far from the hinge 221, the upward movement of the buoyant portion 210 may be impeded by the weight of the magnetic member 211. As such, the magnetic member 211 may be disposed at the center of a lower portion of the buoyant portion 210 so that the weight of the magnetic member 211 does not impede the upward movement of the buoyant portion 210.

In order to increase the buoyant force, the buoyant portion 210 may have a size corresponding to a majority of a surface (e.g., 60% to 90% of the surface) of the lower portion of the reservoir tank 100. If the area of the buoyant portion 210 increases, the overall volume of the buoyant portion 210 may increase. Thus, even if the liquid additive has a large viscosity, the increased buoyant force of the floater 200 causes the floater 200 to float easily.

If a size of a lower surface of the buoyant portion 210 is smaller than 60% of a lower surface of the reservoir tank 100, the volume of the buoyant portion 210 required for generating the buoyant force may be too small. In this case, it is difficult for the buoyant portion 210 to move upward when opposed by the resistance of the liquid additive. If the size of the lower surface of the buoyant portion 210 is larger than 90% of the lower surface of the reservoir tank 100, the buoyant force may be too great. If the buoyant portion 210 is too large, a capacity of the reservoir tank 100 for holding the liquid additive may be unacceptably small.

An air chamber 212 may be formed in an interior space of the buoyant portion 210 so that the buoyant portion 210 is sufficiently buoyant.

The weight 230 is configured to provide a load so that the buoyant portion 210 can be easily moved upward by the buoyant force. The weight 230 may be fastened to the connecting arm 220 by a screw or a bolt 231.

The liquid additive supply device 10 may further include a control unit 400 and a display unit 500 so that the user can easily detect a shortage of the liquid additive or a removal of the reservoir tank 100.

The control unit 400 may detect a shortage of the liquid additive upon receiving a signal sent from the sensing unit 300. The control unit 400 may detect the removal of the reservoir tank 100 upon receiving a signal sent from the removal sensor 620.

The display unit 500 displays indications of a shortage of the liquid additive and a removal of the reservoir tank 100 in response to a control signal transmitted from the control unit 400 to notify the user of the shortage of the liquid additive and the removal of the reservoir tank 100.

Different examples of the floater 200 will now be described with reference to Figs. 6 to 8, according to embodiments of the present invention.

Referring to Fig. 6, the slanted portion 201 of the floater 200 may include curved surfaces with a pointed top so that the floater 200 (e.g., the buoyant portion 210) has a streamlined vertical cross section.

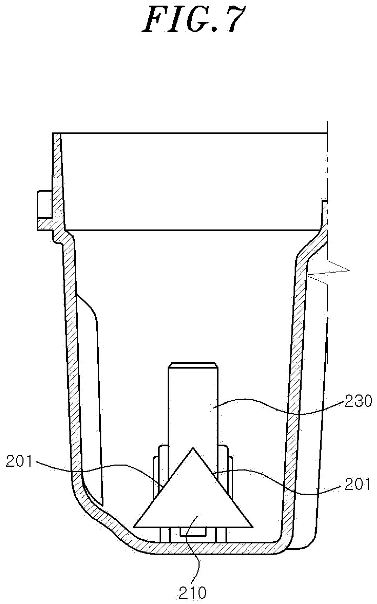

As illustrated in Fig. 7, the slanted portion 201 may include flat surfaces meeting at a point such that the floater 200 has a triangular overall vertical cross section.

As illustrated in Fig. 8, the slanted portion 201 may include curved surfaces with a round top such that the floater 200 has a semicircular vertical cross section.

For the embodiments depicted in Fig.7 and Fig. 8, even if the liquid additive has a relatively high viscosity, the resistance of the liquid additive is smaller than when the upper surface of the buoyant portion 210 is a flat surface. This enables the buoyant portion 210 to easily float upward.

Although exemplary embodiments of the present disclosure are described above with reference to the accompanying drawings, those skilled in the art will understand that the present disclosure may be implemented in various ways without changing the necessary features or the spirit of the present disclosure.

Therefore, it should be understood that the exemplary embodiments described above are not limiting, but only an example in all respects. The scope of the present disclosure is expressed by claims below, not the detailed description, and it should be construed that all changes and modifications achieved from the meanings and scope of claims and equivalent concepts are included in the scope of the present disclosure.

From the foregoing, it will be appreciated that various embodiments of the present disclosure have been described herein for purposes of illustration, and that various modifications may be made without departing from the scope of the present disclosure. The exemplary embodiments disclosed in the specification of the present disclosure do not limit the present disclosure. The scope of the present disclosure will be interpreted by the claims below.

## Claims

1. A washing machine comprising:
a drum (5) configured to hold laundry;
a water supply unit (30) configured to supply water into the drum (5); and
a liquid additive supply device (10) configured to supply a liquid additive into the drum (5),
wherein the liquid additive supply device (10) comprises:
a reservoir tank (100) configured to hold liquid additive; and
a buoyant floater (200) disposed in the reservoir tank (100) and configured to float on a surface of the liquid additive, wherein a position of the floater (200) indicates a fill-level of the liquid additive, and
wherein the buoyant floater (200) comprises a slanted portion (201) having a width narrowing toward a top thereof to reduce a resistance of the liquid additive when the floater (200) floats upward,
wherein the floater (200) is comprising: a buoyant portion (210) configured to generate a buoyant force; **characterized in that** the floater (200) is comprising:
a connecting arm (220) rotatably coupled to the buoyant portion at a first side of the floater (200) and coupled to one side of the reservoir tank (100) by a hinge (221); and
a weight (230) provided at a second side of the floater (200) and configured to apply a load to the connecting arm (220), wherein the first side and the second side are opposite to each other.

2. The washing machine of claim 1, wherein the reservoir tank (100) comprises a first tank (110) and a second tank (120), wherein the first tank (110) is configured to hold a first type of liquid additive and comprises a first buoyant floater, and wherein the second tank (120) is configured to accommodate a second kind of liquid additive and comprises a second buoyant floater.

3. The washing machine of claim 1, wherein the liquid additive supply device (10) further comprises a sensing unit (300) disposed on a side of the reservoir tank (100) facing the buoyant portion (210), and configured to sense a proximity of the buoyant portion (210), and a magnetic member (211) disposed inside of a lower portion of the buoyant portion (210) and wherein the sensing unit (300) is configured to detect the magnetic member (211).

4. The washing machine of claim 1, wherein the buoyant portion (210) covers 60% to 90% of a lower surface of the reservoir tank (100).

5. The washing machine of claim 1, wherein the weight (230) is fastened to the connecting arm (220) by at least one of a screw or a bolt (231).

6. The washing machine of claim 3, wherein the liquid additive supply device (10) further comprises:
a control unit (400) configured to identify a shortage of liquid additive in response to a shortage signal transmitted from the sensing unit (300); and
a display unit (500) configured to display an indication of the shortage of the liquid additive in response to a control signal transmitted from the control unit (400).

7. The washing machine of claim 1, wherein the slanted portion (201) comprises curved surfaces and wherein the floater (200) comprises a streamlined vertical cross section.

8. The washing machine of claim 1, wherein the slanted portion (201) comprises flat surfaces and wherein the floater (200) has a triangular vertical cross section.

9. The washing machine of claim 1, wherein the slanted portion (201) comprises curved surfaces with a round top end and wherein the floater (200) has a semicircular vertical cross section.

10. The washing machine of claim 1, wherein the reservoir tank (100) is disposed within an interior space of a detergent dispenser (70) which is installed in an upper portion of the washing machine (1).

11. The washing machine of claim 1, wherein the floater (200) is disposed on one side of a lower portion of the reservoir tank (100).

## Patentansprüche

1. Eine Waschmaschine umfassend
eine Trommel (5) zum Aufnehmen von Wäsche,
eine Wasser-Zuführeinheit (30) zum Zuführen von Wasser in die Trommel (5), und
eine Zuführvorrichtung (10) für ein flüssiges Zusatzmittel zum Zuführen eines flüssigen Zusatzmittels in die Trommel (5),
wobei die Zuführvorrichtung (10) für das flüssige Zusatzmittel umfasst:
einen Speicherbehälter (100) zum Aufnehmen eines flüssigen Zusatzmittels, und
einen in dem Speicherbehälter (100) angeordneten Auftriebsschwimmer (200), der so ausgebildet ist, dass er an einer Oberfläche des flüssigen Zusatzmittels schwimmt, wobei eine Position des Auftriebsschwimmers (200) einen Füllstand des flüssigen Zusatzmittels anzeigt, und wobei der Auftriebsschwimmer (200) einen geneigten Abschnitt (201) mit einer Breite aufweist, die sich zu einer Oberseite desselben hin verjüngt, um einen Widerstand des flüssigen Zusatzmittels zu reduzieren, wenn der Auftriebsschwimmer (200) nach oben treibt,
wobei der Schwimmer (200) umfasst:
einen Auftriebsabschnitt (210) zum Erzeugen einer Auftriebskraft, **dadurch gekennzeichnet, dass** der Schwimmer (200) umfasst:
einen Verbindungsarm (220), der an einer ersten Seite des Schwimmers (200) drehbar mit dem Auftrieb-Abschnitt gekoppelt ist und über ein Scharnier (221) mit einer Seite des Speicherbehälters (100) gekoppelt ist, und
ein an einer zweiten Seite des Schwimmers (200) vorgesehenes Gewicht (230) zum Ausüben einer Last auf den Verbindungsarm (220), wobei die erste Seite und die zweite Seite einander gegenüberliegen.

2. Die Waschmaschine gemäß Anspruch 1, wobei der Speicherbehälter (100) einen ersten Behälter (110) sowie einen zweiten Behälter (120) umfasst, wobei der erste Behälter (110) zum Aufnehmen einer ersten Sorte eines flüssigen Zusatzmittels ausgebildet ist und einen ersten Auftriebsschwimmer umfasst, und wobei der zweite Behälter (120) zum Aufnehmen einer zweiten Sorte eines flüssigen Zusatzmittels ausgebildet ist und einen zweiten Auftriebsschwimmer umfasst.

3. Die Waschmaschine gemäß Anspruch 1, wobei die Zuführvorrichtung (10) für das flüssige Zusatzmittel ferner eine Sensoreinheit (300) umfasst, die an einer dem Auftrieb-Abschnitt (210) zugewandten Seite des Speicherbehälters (100) angeordnet ist und zum Erfassen einer Nähe des Auftrieb-Abschnitts (210) ausgebildet ist, sowie ein in einem unteren Abschnitt des Auftrieb-Abschnitts (210) angeordnetes Magnetelement (211), und wobei die Sensoreinheit (300) zum Erfassen des Magnetelements (211) ausgebildet ist.

4. Die Waschmaschine gemäß Anspruch 1, wobei der Auftrieb-Abschnitt (210) 60% bis 90% einer unteren Fläche des Speicherbehälters (100) abdeckt.

5. Die Waschmaschine gemäß Anspruch 1, wobei das Gewicht (230) mittels einer Schraube und/oder einem Bolzen (231) an dem Verbindungsarm (220) befestigt ist.

6. Die Waschmaschine gemäß Anspruch 3, wobei die Zuführvorrichtung (10) für das flüssige Zusatzmittel ferner umfasst:
eine Steuereinheit (400) zum Identifizieren eines Mangels an flüssigem Zusatzmittel in Abhängigkeit von einem von der Sensoreinheit (300) übermittelten Mangelsignal, und
eine Anzeigeeinheit (500) zum Anzeigen einer Angabe eines Mangels an flüssigem Zusatzmittel in Abhängigkeit von einem von der Steuereinheit (400) übermittelten Steuersignal.

7. Die Waschmaschine gemäß Anspruch 1, wobei der geneigte Abschnitt (201) gekrümmte Flächen umfasst, und wobei der Schwimmer (200) einen stromlinienförmigen vertikalen Querschnitt umfasst.

8. Die Waschmaschine gemäß Anspruch 1, wobei der geneigte Abschnitt (201) ebene Flächen umfasst, und wobei der Schwimmer (200) einen dreieckigen vertikalen Querschnitt aufweist.

9. Die Waschmaschine gemäß Anspruch 1, wobei der geneigte Abschnitt (201) gekrümmte Flächen mit einem runden oberen Ende umfasst, und wobei der Schwimmer (200) einen halbkreisförmigen vertikalen Querschnitt aufweist.

10. Die Waschmaschine gemäß Anspruch 1, wobei der Speicherbehälter (100) in einem Innenraum eines Waschmittelfachs (70) angeordnet ist, das in einem oberen Abschnitt der Waschmaschine (1) installiert ist.

11. Die Waschmaschine gemäß Anspruch 1, wobei der Schwimmer (200) an einer Seite eines unteren Abschnitts des Speicherbehälters (100) angeordnet ist.

## Revendications

1. Machine à laver comprenant :
un tambour (5) configuré pour contenir du linge ;
une unité d'alimentation en eau (30) configurée pour amener l'eau dans le tambour (5) ; et
un dispositif d'alimentation en additif liquide (10) configuré pour amener un additif liquide dans le tambour (5),
dans laquelle le dispositif d'alimentation en additif liquide (10) comprend :
un réservoir (100) configuré pour contenir l'additif liquide ; et
un flotteur flottant (200) disposé dans le réservoir (100) et configuré pour flotter sur une surface de l'additif liquide, dans laquelle une position du flotteur (200) indique un niveau de remplissage de l'additif liquide, et
dans laquelle le flotteur flottant (200) comprend une partie inclinée (201) ayant une largeur se rétrécissant vers son sommet afin de réduire une résistance de l'additif liquide lorsque le flotteur (200) flotte vers le haut,
dans laquelle le flotteur (200) comprend :
une partie flottante (210) configurée pour générer une force de flottabilité **caractérisé en ce que** le flotteur (200) comprend :
un bras de raccordement (220) couplé, en rotation, à la partie flottante au niveau d'un premier côté du flotteur (200) et couplé au premier côté du réservoir (100) par une charnière (221) ; et
un poids (230) prévu au niveau d'un second côté du flotteur (200) et configuré pour appliquer une charge sur le bras de raccordement (220), dans lequel le premier côté et le second côté sont opposées entre eux.

2. Machine à laver selon la revendication 1, dans lequel le réservoir (100) comprend un premier réservoir (110) et un second réservoir (120), dans lequel le premier réservoir (110) est configuré pour contenir un premier type d'additif liquide et comprend un premier flotteur flottant, et
dans laquelle le second réservoir (120) est configuré pour loger un second type d'additif liquide et comprend un second flotteur flottant.

3. Machine à laver selon la revendication 1, dans lequel le dispositif d'alimentation en additif liquide (10) comprend en outre une unité de détection (300) disposée sur un côté du réservoir (100) faisant face à la partie flottante (210), et configurée pour détecter une proximité de la partie flottante (210) et un élément magnétique (211) disposé à l'intérieur d'une partie inférieure de la partie flottante (210) et dans laquelle l'unité de détection (300) est configurée pour détecter l'élément magnétique (211).

4. Machine à laver selon la revendication 1, dans lequel la partie flottante (210) couvre de 60 % à 90 % d'une surface inférieure du réservoir (100).

5. Machine à laver selon la revendication 1, dans lequel le poids (230) est fixé sur le bras de raccordement (220) par au moins l'un parmi une vis ou un boulon (231).

6. Machine à laver selon la revendication 3, dans lequel le dispositif d'alimentation en additif liquide (10) comprend en outre :
une unité de commande (400) configurée pour identifier un épuisement d'additif liquide en réponse à un signal d'épuisement transmis par l'unité de détection (300) ; et
une unité d'affichage (500) configurée pour afficher une indication de l'épuisement de l'additif liquide en réponse à un signal de commande transmis par l'unité de commande (400).

7. Machine à laver selon la revendication 1, dans lequel la partie inclinée (201) comprend des surfaces incurvées et dans laquelle le flotteur (200) comprend une section transversale verticale aérodynamique.

8. Machine à laver selon la revendication 1, dans lequel la partie inclinée (201) comprend des surfaces plates et dans laquelle le flotteur (200) a une section transversale verticale rectangulaire.

9. Machine à laver selon la revendication 1, dans lequel la partie inclinée (201) comprend des surfaces incurvées avec une extrémité supérieure ronde et dans laquelle le flotteur (200) a une section transversale verticale semi-circulaire.

10. Machine à laver selon la revendication 1, dans lequel le réservoir (100) est disposé à l'intérieur d'un espace intérieur d'un distributeur de lessive (70) qui est installé dans une partie supérieure de la machine à laver (1).

11. Machine à laver selon la revendication 1, dans lequel le flotteur (200) est disposé sur un côté d'une partie inférieure du réservoir (100).
